**Europäisches Patentamt**

**European Patent Office**

**Office européen des brevets**

(19)

(11) Veröffentlichungsnummer : **0 046 540**
**B1**

(12) **EUROPÄISCHE PATENTSCHRIFT**

(45) Veröffentlichungstag der Patentschrift :
20.02.85

(51) Int. Cl.⁴ : **B 62 J   9/00**

(21) Anmeldenummer : **81106289.2**

(22) Anmeldetag : **12.08.81**

(54) **Motorradkoffer.**

(30) Priorität : **27.08.80 DE 3032330**

(43) Veröffentlichungstag der Anmeldung :
**03.03.82 Patentblatt 82/09**

(45) Bekanntmachung des Hinweises auf die Patenterteilung : **20.02.85 Patentblatt 85/08**

(84) Benannte Vertragsstaaten :
**AT BE CH DE FR GB IT LI LU NL SE**

(56) Entgegenhaltungen :
**CH-A-   178 726**
**DE-A- 2 426 224**
**DE-A- 2 733 713**
**DE-B- 2 816 045**
**GB-A- 1 236 993**
**US-A- 2 783 927**
**US-A- 4 163 513**

(73) Patentinhaber : **KRAUSER Kraftfahrzeug-Zubehör**
**Vertriebs-GmbH**
**Hörmannsbergerstrasse 18**
**D-8905 Mering (DE)**

(72) Erfinder : **Krauser, Michael**
**Obere Bahnhofstrasse 56-60**
**D-8034 Germering (DE)**

(74) Vertreter : **von Kirschbaum, Albrecht, Dipl.-Ing.**
**Hermann-Ehlers-Strasse 21a**
**D-8034 Germering (DE)**

## Beschreibung

Die Erfindung betrifft einen Motorradkoffer nach dem Oberbegriff des Anspruchs 1.

In der DE-OS-27 33 713 ist ein Koffer dargestellt und beschrieben, bei welchem am Kofferunterteil und am Kofferdeckel Versteifungsrahmen, vorzugsweise in Form von Aluminium-Strangpreßprofilen vorgesehen ist. Diese Versteifungsrahmen sind mit einer Vielzahl von Klammern sowohl am Kofferdeckel als auch am Kofferunterteil angeklammert. Die im allgemeinen eingeschossenen Klammern sind mittels eines Selbstklebebandes sowohl im Deckel als auch im Unterteil abgedeckt. Ferner sind der Kofferunterteil und der Kofferdeckel des bekannten Motorradkoffers durch zwei Scharniere aus Aluminiumblech miteinander verbunden, wobei diese Scharniere am Kofferunterteil bzw. -deckel angenietet sind.

Ferner sind an dem vom Kofferunterteil vorstehenden Rand des Versteifungsrahmens absperrbare Schlösser und ein dazwischen angeordneter, versenkbarer Traggriff angenietet.

Den am Rahmen des Kofferunterteils angebrachten Schlössern sind im Deckel Haltezungen zugeordnet, die an dessen Versteifungsrahmen mit je zwei Niete angenietet sind.

Ferner sind bei dem bekannten Koffer unmittelbar unterhalb der Längsseiten des Versteifungsrahmens des Kofferunterteils an gegenüberliegenden Stellen jeweils zwei Gurte angenietet. Da die Gurte fest am oberen Rand des Kofferunterteils angebracht sind, wird dieses bei starkem Anziehen der Gurte verformt, was zur Folge hat, daß dann der vorstehende Rand des Versteifungsrahmens am Kofferunterteil nicht mehr in die im Rahmen des Deckels ausgebildete Nut paßt, und der Koffer dann nur mit Schwierigkeiten verschließbar ist und insbesondere nicht mehr nicht ist. Beim Öffnen des bekannten Koffers klappt dessen Deckel sofort herunter, da keinerlei Sicherung bzw. Halterung zwischen Kofferunterteil und -deckel vorgesehen ist.

Aufgrund dieser Ausbildung des bekannten Motorradkoffers ist dessen Montage insgesamt sehr arbeitsintensiv, was wiederum hohe Entstehungskosten nach sich zieht.

Aufgabe der Erfindung ist es daher, einen Motorradkoffer der im Oberbegriff des Anspruchs 1 angegebenen Art zu schaffen, bei welchem das zeitaufwendige und damit arbeitsintensive Anbringen der Rahmen-, Scharnier-, Halterungs- und Schließteile am Kofferdeckel sowie am Kofferunterteil entfällt bzw. in viel weniger Schritten durchführbar ist.

Gemäß der Erfindung ist diese Aufgabe bei einem Motorrad der im Oberbegriff des Anspruchs 1 angegebenen Art durch die Merkmale im kennzeichnenden Teil des Anspruchs gelöst. Vorteilhafte Weiterbildungen der Erfindung sind in den Unteransprüchen angegeben.

Hierbei ist bei dem vorzugsweise aus ABS (Acryl-Butadien-Styrol) hergestellten Motorradkoffer vorteilhaft, daß an dessen Unterteil und Deckel der Versteifungsrahmen bereits vollkommen integriert ist, d. h. der jeweilige Versteifungsrahmen und der Kofferunterteil bzw. der Kofferdeckel einstückig ausgebildet sind. Somit entfällt bei dem erfindungsgemäßen Motorradkoffer das arbeitsaufwendige Anklammern eines Versteifungsrahmens sowohl am Kofferdeckel als auch am -unterteil. Ferner sind bei dem erfindungsgemäßen Motorradkoffer an einer Längsseite des Versteifungsrahmens des Deckels und Unterteils entsprechende Führungs- und Halterungsteile ausgebildet, in welche mehrteilige Filmscharniere einklipsbar sind, so daß auch dadurch ein zeitaufwendiges und umständliches Annieten der Scharniere entfällt.

Die vorstehend verwendeten Angaben vorne oder hinten bzw. rechts oder links beziehen sich immer auf die Fahrtrichtung eines Motorrads, an welchem ein solcher Motorradkoffer angebracht ist. Ferner steht, wenn der erfindungsgemäße Koffer geschlossen ist, ein rings um den Kofferunterteil verlaufender Rand wesentlich tiefer in eine entlang des Deckelrahmens ausgebildete Nut vor, in welche in bekannter Weise zur Abdichtung ein Schaumgummistreifen eingelegt ist, so daß dadurch die Dichtigkeit dieses Motorradkoffers viel eher gewährleistet ist.

Gemäß einer vorteilhaften Weiterbildung der Erfindung sind am Boden des Kofferunterteils an dessen beiden Längsseiten jeweils vier Ansätze engeformt, die paarweise etwa im Abstand des anzubringenden Gurtes angeordnet sind. In die beiden einander zugeordneten Ansätze wird jeweils ein in ein Gurtende eingelegter Quersteg vorzugsweise mittels Ultraschall eingeschweißt. Damit ist zum einen das ebenfalls wieder sehr arbeitsintensive Annieten der Gurtenden entfallen, und zum anderen kann der Kofferunterteil bei starkem Anziehen nicht mehr verformt werden, da, wie ausgeführt, die Gurte nunmehr am Boden des Unterteils angebracht sind. Darüber hinaus hat das Anordnen und Anbringen der Gurte am Boden des Kofferunterteils den Vorteil, daß in dem Koffer bereits wenige Kleidungsstücke sicher gehalten werden können.

Gemäß einer weiteren vorteilhaften Ausbildung der Erfindung ist an der den Filmscharnieren gegenüberliegenden Deckelrahmen-Längsseite mittig ein abschließbares Zentralschloß vorgesehen, das in eine am Deckelrahmen vorgesehene Öffnung eingesetzt wird und von innen gesichert ist. Diesem Zentralschloß ist im Kofferunterteil eine übliche Zuhaltezunge zugeordnet, die lediglich in entsprechende Führungen eingeschoben wird und mittels eines Niets in dieser Lage festgehalten ist.

Ferner sind im Kofferunterteil rechts und links von dem versenkbaren Traggriff Zuhalteschlösser angebracht. Für die Anbringung der am Kofferdeckel vorzusehenden Zungen sind in dessen Rand entsprechende Ausnehmungen mit Führungen vorgesehen, an denen sogenannte Energierichtungsgeber ausgebildet sind. In diesen Ausnehmungen werden dann bei der Montage des Koffers die den Zuhalteschlössern zuzuordnenden Haltezungen eingelegt ; über den eingelegten Haltezungen wird dann ein entsprechend bemessenes Plättchen gelegt, das dann mittels Ultraschall aufgeschweißt ist. Dadurch ist in einfacher Weise eine lagerichtige und sichere Halterung der Zuhaltezungen im Versteifungsrahmen des Kofferdeckels erreicht. Schließlich ist gemäß noch einer weiteren vorteilhaften Ausbildung der Erfindung zur Halterung des Kofferdeckels an dem Kofferunterteil auf einer Seite der beiden Kofferteile je ein Schenkel eines Scherenscharniers so versetzt angebracht, daß der Kofferdeckel beim Öffnen nur um weniger als 90° herunterklappen kann und in dieser Lage dann durch das Scherenscharnier gesichert ist.

Nunmehr wird die Erfindung anhand einer bevorzugten Ausführungsform im einzelnen erläutert. Es zeigen :

Figur 1 schematisch einen in einer Motorradhalterung eingehängten linken Motorradkoffer gemäß der Erfindung ;

Figur 2 schematisch einen geöffneten rechten Motorradkoffer gemäß der Erfindung ;

Figur 3 eine Schnittansicht des integrierten Versteifungsrahmens des Kofferunterteils beispielsweise an dessen Breitseite ;

Figur 4 eine Draufsicht auf einen Teil der Führungs- und Halterungsteile in einer Längsseite des Kofferunterteils, bevor Filmscharniere eingeklipst sind ;

Figur 5 eine Schnittansicht entlang der Linie V-V in Figur 4, wobei das bereits eingeklipste Filmscharnier angedeutet ist ;

Figur 6 eine Draufsicht auf den an einer Ausbuchtung des Bodens des Kofferunterteils ausgebildete Halterungsrippen ;

Figur 7 eine Schnittansicht entlang der Linie VII-VII in Figur 6 ;

Figur 8 eine Schnittansicht durch den Versteifungsrahmen des Kofferdeckels beispielsweise in einer Breitseite ;

Figur 9 eine Draufsicht auf in einer Längsseite des Kofferdeckels ausgebildete Führungs- und Halterungsteile, bevor ein Filmscharnier eingeklipst ist ;

Figur 10 eine Schnittansicht entlang der Linie X-X in Figur 9, wobei ein bereits eingeklipstes Filmscharnier angedeutet ist ;

Figur 11 eine Draufsicht auf eine Ausnehmung in der Längsseite des Kofferdeckels, die den Filmscharnieren gegenüberliegt, bevor eine Zuhaltezunge eingelegt und ein diese Zunge abdeckendes Plättchen aufgeschweißt ist ; und

Figur 12 eine der Figur 11 entsprechende Draufsicht mit eingelegter Haltezunge und aufgeschweißtem Abdeckplättchen.

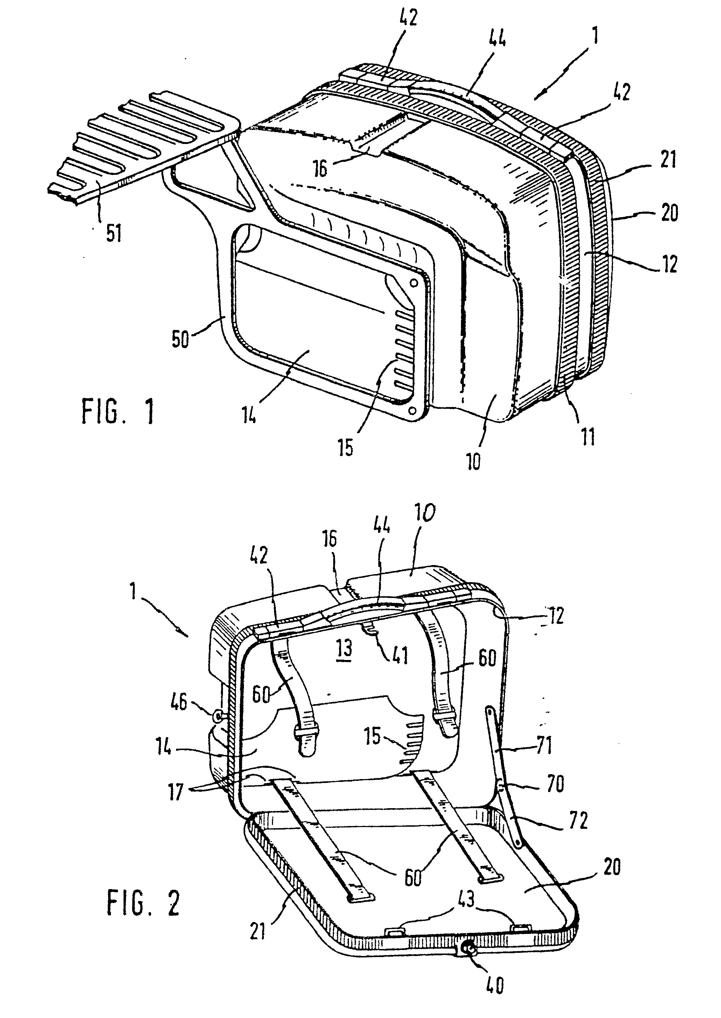

In Figur 1 ist in einer perspektivischen Darstellung schematisch ein Motorradkoffer 1 gemäß der Erfindung dargestellt, der einen Kofferunterteil 10 und einen Kofferdeckel 20 aufweist, die jeweils durch in diesen Teilen integrierte Versteifungsrahmen 11 bzw. 21 verstärkt sind. Der schematisch dargestellte Koffer ist mittels einer an einer Ausbuchtung 14 am Boden 13 des Kofferunterteils 10 ausgebildeten Halterungsrippen 15 in eine schematisch dargestellte Motorradhalterung 50 eingehängt, an welcher hinten oben eine nur angedeutete Querbrücke 51 angebracht ist. Hinten ist der Koffer durch ein in Fig. 2 schematisch dargestelltes und an dem Kofferunterteil angenietetes Sicherungsschloß 46 in eine von dem Halterungsteil 50 vorstehende, im einzelnen nicht dargestellte Zunge eingehängt. Auf dem Rand 12 des Versteifungsrahmens 11 des Kofferunterteils sind oben rechts und links von einem versenkbaren Griff 44 Zuhalteschlösser 42 angebracht. Wie in Figur 2 zu erkennen ist, ist gegenüber dem Traggriff 44 im Kofferdeckel 20 in einer entsprechenden Öffnung ein Zentralschloß 40 eingesetzt, dem im Kofferunterteil eine in Figur 2 dargestellte Zuhaltezunge 41 zugeordnet ist. In Verlängerung dieser Zuhaltezunge 41 ist in der Oberseite des Kofferunterteils 10 eine Vertiefung 16 ausgebildet, die einerseits zur Versteifung des Kofferunterteils dient und die andererseits zur Aufnahme einer Haltezunge 41 eines weiteren Kofferunterteils dient, damit vor der Montage die Kofferunterteile aufeinander gestapelt werden können, so daß durch diese Ausbuchtung eine platzsparende Lagerung ermöglicht ist.

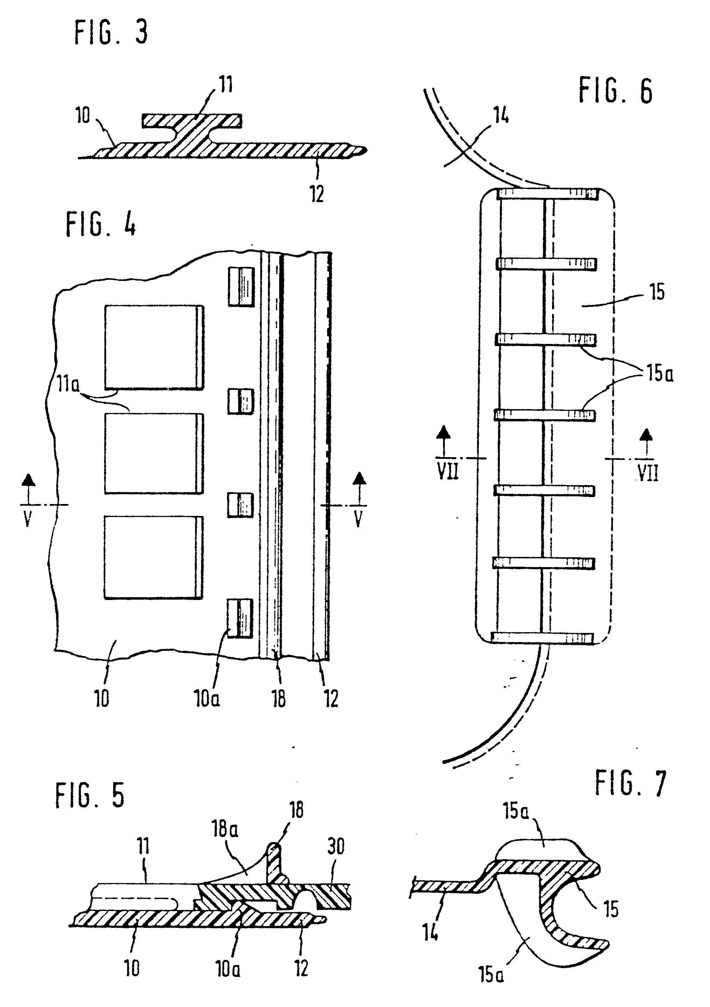

In Figur 2 ist schematisch der in Figur 1 dargestellte Motorradkoffer 1 in geöffnetem Zustand dargestellt. Hierbei sind die gleichen Teile mit denselben Bezugszeichen wie in Figur 1 bezeichnet. Im Boden 13 des Kofferunterteils 10 ist die Ausbuchtung 14 angedeutet, an der in Figur 2 rechts die Halterungsrippen 15 angedeutet ist. Die Halterungsrippen 15 sind im einzelnen vergrößert in Figur 6 in Draufsicht und in Figur 7 in einer Schnittansicht dargestellt. Die einzelnen Rippen sind sowohl innen wie außen durch Versteifungsrippen 15a versteift. Ferner sind in Figur 2 Gurte 60 dargestellt, die jeweils am Boden 13 des Kofferunterteils angebracht sind. Hierbei sind an dem Kofferunterteil (im einzelnen nicht dargestellte) Ansätze 17 ausgebildet, die in zum Kofferdeckel hin vorstehende Rändernenden. Diese Ansätze sind jeweils paarweise an beiden Längsseiten des Kofferunterteils 10 integriert. Jeweils zwei dieser Ansätze sind in einem Abstand voneinander angeordnet, der etwas größer als die Breite der Gurte 60 ist. Bei dem Einsetzen der Gurte wird ein am Gurtende gehalterter Querstab eingelegt, und dieser Querstab wird dann mittels Ultraschall mit den von den Ansätzen vorstehenden Rändern verschweißt.

In Figur 2 ist ferner eine Schere 70 dargestellt, die mit einem Schenkel 71 am Kofferunterteil 10 und mit einem weiteren Schenkel 72 versetzt zu dem Schenkel 71 am Kofferdeckel angebracht ist. Die beiden Schenkel sind an ihren freien, von den Kofferteilen abstehenden Enden gelenkig miteinander verbunden. Durch dieses Scherenscharnier 70 ist sichergestellt, daß der Kofferdeckel 20 bezüglich des Kofferunterteils 10 immer in der dargestellten Lage gehaltert ist, wobei der beispielsweise zwischen den beiden Rändern der beiden Kofferteile 10 und 20 eingeschlossene Winkel, kleiner als 90° ist. Die versetzt zueinander am Kofferunterteil 10 bzw. am Kofferdeckel 20 angebrachten Schenkel 71 und 72 werden beim Schließen des Koffers so nahe entlang des Randes des Kofferunterteils verschwenkt, daß durch das Verschwenken keine Kleidungsstücke eingezwickt werden können.

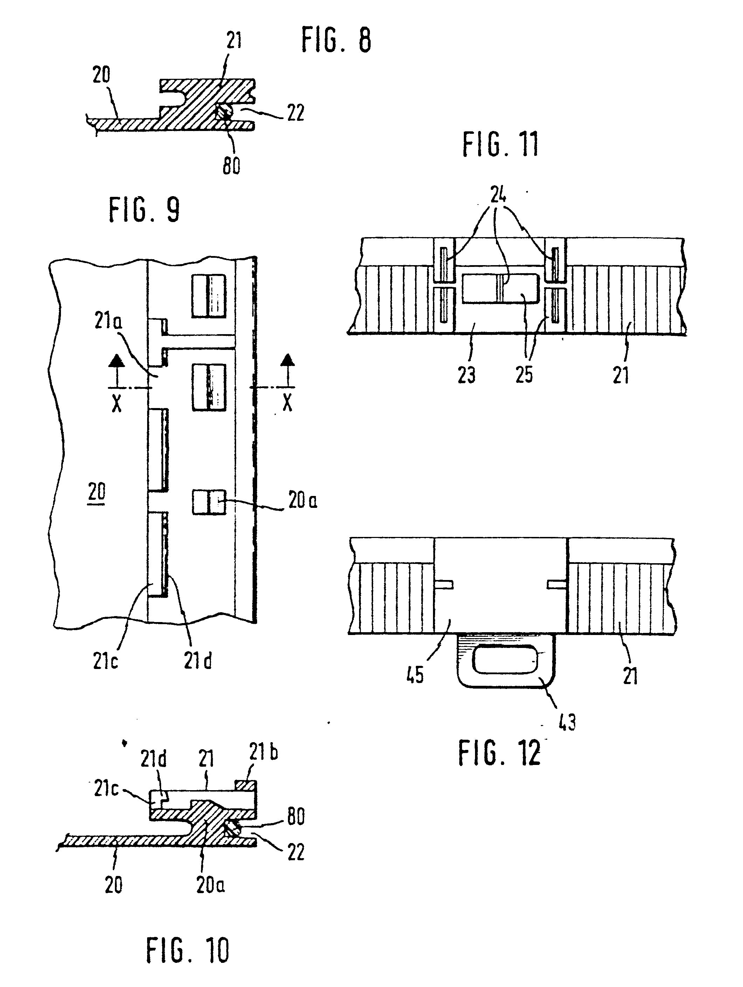

Ferner sind in Figur 2 den am Kofferunterteil 10 angebrachten Zentralschlössern 42 zugeordnete Zuhaltezungen 43 erkennbar. Wie im einzelnen in Figur 11 dargestellt, sind an diesen Stellen des Rahmens 21 des Kofferdeckels Ausnehmungen 23 vorgesehen, in welcher Halterungs- und Führungsteile 25 ausgebildet sind, auf deren Oberseite in Figur 11 dargestellte, sogenannte Energierichtungsweiser 24 ausgebildet sind. In jede der Ausnehmungen 23 wird eine Zuhaltezunge 43 eingelegt, die dann durch die Halte- und Führungsteile in einer ganz bestimmten Lage festgelegt ist. Dann wird über die eingelegte Haltezunge 43 ein kleines Plättchen 45 gelegt, das dann mittels Ultraschall mit den an den Halte- und Führungsteilen ausgebildeten Energierichtungsweisern 24 verschweißt wird. Dadurch ist dann in einfacher Weise eine absolut sichere und zuverlässige Anbringung der Zuhaltezungen 43 im Rahmen 21 des Koffers erreicht. In Figur 12 ist die durch ein Plättchen 45 abgedeckte und in dem Rahmen 21 gehalterte Zuhaltezunge 43 dargestellt.

Figur 3 zeigt eine Schnittansicht des Versteifungsrahmens 11 an einer der Breitseiten des Kofferunterteils 10. Wie aus Figur 3 zu ersehen ist, weist der Versteifungsrahmen 11 aus Gründen der Material- und Gewichtsersparnis beidseitig Einbuchtungen auf. Ferner ist in Figur 3 der von dem Versteifungsrahmen vorstehende Rand 12 zu erkennen, der vorne verhältnismäßig spitz zuläuft. Dieser Rand greift beim Schließen des Koffers in eine am Versteifungsrahmen 21 des Kofferdeckels 20 ausgebildete Nut 22 ein, in welche, wie beispielsweise in Figur 8 und 10 dargestellt ist, zur Abdichtung ein Schaumgummi-, insbesondere Moosgummistreifen 80 eingelegt ist, an welchem im geschlossenen Zustand der vom Rahmen : 11 des Kofferunterteils 10 vorstehende Rand 12 satt anliegt.

In Figur 4 ist in Draufsicht ein Teil der Längsseite des Kofferunterteils 10 dargestellt, in welche Filmscharniere 30 eingeschoben und eingeklipst werden, wie in Figur 5 angedeutet ist. Hierzu sind an der unteren Längsseite des Kofferunterteils Führungs- und Halterungsteile 10a, 11 und 18 ausgebildet. Bei der Montage werden die Filmscharniere 30 unter die Führungsleiste 18 eingeschoben, gleiten entlang der keilförmigen Fläche des Halterungsteils 10a und schnappen hinter diesem Halterungsteil 10a und mit einer an ihrer Rückseite ausgebildeten Hinterschneidung unter einen am Rahmen 11 ausgebildeten Übergriff ein. Dadurch sind dann die Filmscharniere 30 in einfacher Weise in den Kofferunterteil einklipsbar und ohne weitere Maßnahmen fest und sicher an dem Kofferunterteil 10 gehalten. Der Führungsstreifen 18 ist in Figur 5 nach oben verlängert, wodurch insbesondere zum Schutz der eingeklipsten Filmscharniere eine Stoßschutzleiste geschaffen ist, über die dann ein abgestellter Koffer beispielsweise auf dem Boden aufsitzt.

In Figur 8 ist eine der Figur 3 entsprechende Schnittansicht des Rahmens 21 des Kofferdeckels 20 dargestellt. Auf der in Figur 8 rechten Seite ist unter dem Rahmen 21 die Nut 22 ausgebildet, in die zur Abdichtung der Schaumgummi- insbesondere Moosgummistreifen eingelegt ist, gegen den in geschlossenen Zustand der Rand 12 des Kofferunterteils 10 drückt. Ferner ist in den Figur 9 und 10 eine den Figur 4 und 5 entsprechende Darstellung zur Führung und Halterung der Filmscharniere 30 in dem Kofferdeckel dargestellt. Hierbei sind an einer Längsseite 21a des Kofferdeckels 20 den Führungs- und Halterungsteilen 10a, 11 und 18 entsprechende Halterungs- und Führungsteile 20a, 21b und 21d ausgebildet. Unter und in bzw. über diese Halterungs- und Führungsteile werden dann bei der Montage die Filmscharniere eingeführt und eingeschoben, die dann hinter dem Halterungsteil 20a und unter den Übergriff 21d des hinteren Halterungs- teils 21b einschnappen und auf diese Weise ebenfalls sicher und fest an dem Kofferdeckel angebracht sind. Aufgrund der an dem Kofferunterteil 10 und dem Kofferdeckel 20 ausgebildeten Führungs- und Halterungsteile 10a, 11b und 18 bzw. 20a, 21b bis 21d sind somit die Filmscharniere 30 ohne weitere Sicherungs- und Halterungsmittel an den beiden Kofferteilen einklipsbar, die dadurch gelenkig miteinander verbunden sind.

**Ansprüche**

1. Motorradkoffer (1), bestehend aus einem Kofferunterteil (10) und einem Kofferdeckel (20), mit je einem jeweils die Öffnung eines jeden Kofferteils einfassenden Versteifungsrahmen (11, 21), mit den Kofferunterteil und den Kofferdeckel miteinander verbindenden Scharnieren, mit Schlössern zum Verschließen und Absperren des Koffers, mit einem versenkbaren Traggriff (44) und mit Vorrichtungen und Ausbuchtungen am Boden des Kofferunterteils (16) zum Einführen und Sichern des Koffers (1) an einer an einem Motorrad angebrachten Halterung (50), dadurch gekennzeichnet, daß der Versteifungsrahmen (11) und der Kofferunterteil (10) sowie der Versteifungsrahmen (21) und der Kofferdeckel (20) jeweils einstückig ausgebildet sind, und daß sowohl am Kofferunterteil (10) als auch am Kofferdeckel (20) Halterungs- und Führungsteile (10a, 11, 18 bzw. 20a, 21b, 21d) angeformt sind, in die zur gelenkigen Verbindung des Kofferunterteils (10) und des Kofferdeckels (20) die Scharniere in Form von Filmscharnieren (30) einklipsbar sind.

2. Motorradkoffer nach Anspruch 1, dadurch gekennzeichnet, daß bei geschlossenem Koffer (1) der rings um den Kofferunterteil (10) verlaufende Rand (12) tief in eine entlang des Deckelrahmens (21) ausgebildete Nut (22) vorsteht, in die zur Abdichtung ein Schaumgummistreifen (80) eingelegt ist.

3. Motorradkoffer nach den Ansprüchen 1 und 2, dadurch gekennzeichnet, daß an der den Filmscharnieren (30) gegenüberliegenden Deckelrahmen-Längsseite mittig ein abschließbares Zentralschloß (40) eingesetzt und gesichert ist, dem im Kofferunterteil (10) eine hinter Führungen eingeschobene und gesicherte Haltezunge (41) zugeordnet ist, und daß rechts und links vom versenkbaren Traggriff (44) am vorstehenden Rand (12) des Kofferunterteils (10) Zuhalteschlösser (42) angebracht sind, denen am Kofferdeckel (20) angebrachte Zungen (43) zugeordnet sind.

4. Motorradkoffer nach Anspruch 3, dadurch gekennzeichnet, daß die den Zuhalteschlössern (42) zugeordneten Haltezungen (43) im Deckelrahmen (21) eingelegt und durch eingeschweißte Plättchen (45) gesichert und abgedeckt sind.

5. Motorradkoffer nach Anspruch 1, dadurch gekennzeichnet, daß die Gurte (60) innen am Boden (13) des Kofferunterteils (10) in an dessen beiden Längsseiten integrierten Ansätzen (17) eingeschweißt sind.

6. Motorradkoffer nach einem der vorhergehenden Ansprüche, dadurch gekennzeichnet, daß am Kofferunterteil (10) und am Kofferdeckel (20) je ein Schenkel (71, 72) einer Schere (70) so versetzt angebracht sind, daß im geöffneten Zustand der Kofferunterteil (10) und -deckel (20) einen Winkel von weniger als 90° miteinander bilden.

## Claims

1. Motor cycle pannier (1) consisting of a lower pannier part (10) and a pannier lid (20), with a respective stiffening frame (11, 21) lining the opening of each pannier part, with hinges connecting the lower pannier part and the pannier lid each with the other, with locks for the closing and locking of the pannier, with a concealable carrier handle (44) and with devices and convexities at the base of the lower pannier part (10) for the introduction of the pannier into and securing of the pannier at a mounting (50) mounted at a motor cycle, characterised thereby, that the stiffening frame (11) and the lower pannier part (10) as well as the stiffening frame (21) and the pannier lid (20) are respectively constructed integrally and that mounting and guide parts (10a, 11, 18 or 20a, 21b, 21d), into which the hinges are clippable in the form of film hinges (30) for the articulated connection of the lower pannier part (10) and the pannier lid (20), are shaped on at the lower pannier part (10) as well as also at the pannier lid (20).

2. Motor cycle pannier according to claim 1, characterised thereby, that when the pannier (1) is closed, the rim (12) extending around the lower pannier part (10) projects deeply into a groove (22), which is formed along the lid frame (21) and into which a foam rubber strip (80) is laid for sealing.

3. Motor cycle pannier according to the claims 1 and 2, characterised thereby, that a lockable central clasp (40) is inserted and secured centrally at the longitudinal lid frame side lying opposite the film hinges (30) and is associated in the lower pannier part (10) with a retaining tongue (41) pushed in and secured behind guides and that buckles (42), which are associated with tongues (43) mounted at the pannier lid (20) are mounted at the projecting rim (12) of the lower pannier part (10) to the right and left of the concealable carrier handle (44).

4. Motor cycle pannier according to claim 3, characterised thereby, that the retaining tongues (43) associated with the clasps (42) are laid into the lid frame (21) and secured and covered by welded-in platelets (45).

5. Motor cycle pannier according to claim 1, characterised thereby, that the balts (60) are welded in inside at the base (13) of the lower pannier part (10) in projections (17) integrated therewith at both longitudinal sides thereof.

6. Motor cycle pannier according to one of the preceding claims, characterised thereby, that a respective limb (71, 72) of a scissors (70) is mounted so displaced at the lower pannier part (10) and at the pannier lid (20) that the lower pannier part (10) and lid (20) in the opened state form an angle of less than 90° one with the other.

## Revendications

1. Coffre de moto (1) comprenant une partie inférieure (10) et un couvercle (20) munis chacun d'un cadre de renforcement (11, 21) entourant respectivement l'ouverture de chacune de ces parties de coffre, avec des charnières réunissant l'une à l'autre la partie inférieure et le couvercle, avec des serrures pour fermer et verrouiller ledit coffre, avec une poignée (44) escamotable et avec des dispositifs et des échancrures prévus dans le fond de la partie inférieure (10) pour engager et fixer solidement le coffre (1) dans un élément de retenue (50) monté sur une motocyclette, caractérisé en ce que le cadre de renforcement (11) et la partie inférieure (10) constituent une seule pièce, de même que le cadre de renforcement (21) et le couvercle (20), et que sont prévus aussi bien sur la partie inférieure (10) que sur le couvercle (20), respectivement des moyens de guidage et de retenue (10a, 11, 18 et 20a, 21b, 21d) dans lesquels sont engagées et accrochées élastiquement les charnières qui sont des charnières souples (30) pour réunir de façon articulée la partie inférieure (10) et le couvercle (20).

2. Coffre de moto selon la revendication 1 caractérisé en ce que, lorsqu'il est fermé, le bord (12) qui fait tout le tour de la partie inférieure (10) s'enfonce profondément à l'intérieur d'une rainure (22) ménagée le long du cadre du couvercle (21) et dans laquelle est logée une bande de caoutchouc mousse (80) assurant l'étanchéité.

3. Coffre de moto selon les revendications 1 et 2 caractérisé en ce qu'au milieu du grand côté du cadre du couvercle situé à l'opposé des charnières souples (30) est montée et solidement fixée une serrure centrale (40) fermant à clé à laquelle correspond dans la partie inférieure (10) une languette de retenue (41) disposée et solidement fixée dans des rainures de guidage, cependant que des moyens de verrouillage (42) auxquels correspondent des languettes (43) disposées sur le couvercle (20) sont fixés à droite et à gauche de la poignée (44) escamotable, sur le bord (12) en saillie de la partie inférieure (10).

4. Coffre de moto selon la revendication 3 caractérisé en ce que les languettes de retenue (43) correspondantes aux moyens de verrouillage (42) sont introduites dans le cadre du couvercle (21), recouvertes et fixées solidement au moyen de plaquettes (45) soudées.

5. Coffre de moto selon la revendication 1 caractérisé en ce que les courroies (60) sont soudées intérieurement au fond (13) de la partie inférieure (10) à des bossages (17) qui sont incorporés aux deux grands côtés de cette partie inférieure.

6. Coffre de moto selon l'une quelconque des revendications 1 à 5 caractérisé en ce que, à la partie inférieure (10) et au couvercle (20) sont fixées respectivement les branches (71, 72) d'un compas (70) ayant un angle d'ouverture tel que, lorsque le coffre est ouvert, la partie inférieure (10) et le couvercle (20) font entre eux un angle inférieur à 90°.

FIG. 1

FIG. 2

FIG. 3

FIG. 4

FIG. 5

FIG. 6

FIG. 7

FIG. 8

20  21

22

80

FIG. 11

24

23  25  21

FIG. 9

21a

X  X

20

20a

21c  21d

45

21

43

FIG. 12

21d  21  21b

21c

80

22

20  20a

FIG. 10

3